# EUROPEAN PATENT APPLICATION

(11) **EP 4 503 472 A1**
(43) Date of publication of application: **05.02.2025**
(21) Application number: 23189347.0
(22) Date of filing: 02.08.2023
(51) Int. Cl.: H04B 7/185

(54) **METHOD FOR PROVIDING RADIO COVERAGE TO USER EQUIPMENTS OF OR CONNECTED TO A MOBILE COMMUNICATION NETWORK BY MEANS OF A NON-TERRESTRIAL ANTENNA ENTITY OR FUNCTIONALITY, SYSTEM OR MOBILE COMMUNICATION NETWORK, USER EQUIPMENT, NON-TERRESTRIAL ANTENNA ENTITY OR FUNCTIONALITY, PROGRAM AND COMPUTER-READABLE MEDIUM**

(71) Applicant: Deutsche Telekom AG, 53113 Bonn (DE)
(72) Inventor: KLATT, Axel, 50999 Köln (DE)
(74) Representative: Schwöbel, Thilo K.

(57) **Abstract**

The invention relates to a method for providing radio coverage to user equipments of or connected to a mobile communication network by means of a non-terrestrial antenna entity or functionality being part of a radio access network of the mobile communication network, wherein the radio coverage is provided in different geographical areas during different time periods by means of the antenna entity or functionality orbiting the earth and having a certain total field of view, wherein the antenna entity or functionality realizes a plurality of different radio beams, each of these radio beams covering a specific part of the total field of view, wherein the antenna entity or functionality is able to be configured such that:
-- at least a first radio beam, having a first specific part of the total field of view, is configured such that the first specific part of the total field of view corresponds to a comparatively large coverage area,
-- at least a second radio beam, having a second specific part of the total field of view, is configured such that the second specific part of the total field of view corresponds to a smaller coverage area compared to the first specific part,
wherein in order to provide radio coverage to a specific geographic area having an increased demand of transmission capacity, the method comprises the step of operating the antenna entity or functionality such that, during a specific time interval of the specific geographic area being part of the total field of view of the antenna entity or functionality, radio coverage is provided, to the specific geographic area, by, or using, the second radio beam, or both the first radio beam and the second radio beam.

## Description

### BACKGROUND

The present invention relates a method for providing radio coverage to user equipments of or connected to a mobile communication network by means of a non-terrestrial antenna entity or functionality being part of a radio access network of the mobile communication network, wherein the radio coverage is provided in different geographical areas during different time periods by means of the antenna entity or functionality orbiting the earth and having a certain total field of view, wherein the antenna entity or functionality realizes a plurality of different radio beams, each of these radio beams covering a specific part of the total field of view, wherein the antenna entity or functionality is able to be configured such that:
-- at least a first radio beam, having a first specific part of the total field of view, is configured such that the first specific part of the total field of view corresponds to a comparatively large coverage area,
-- at least a second radio beam, having a second specific part of the total field of view, is configured such that the second specific part of the total field of view corresponds to a smaller coverage area compared to the first specific part.

Furthermore, the present invention relates to a system or mobile communication network for providing radio coverage to user equipments of or connected to the mobile communication network by means of a non-terrestrial antenna entity or functionality being part of a radio access network of the mobile communication network, wherein the radio coverage is provided in different geographical areas during different time periods by means of the antenna entity or functionality orbiting the earth and having a certain total field of view, wherein the antenna entity or functionality realizes a plurality of different radio beams, each of these radio beams covering a specific part of the total field of view, wherein the antenna entity or functionality is able to be configured such that:
-- at least a first radio beam, having a first specific part of the total field of view, is configured such that the first specific part of the total field of view corresponds to a comparatively large coverage area,
-- at least a second radio beam, having a second specific part of the total field of view, is configured such that the second specific part of the total field of view corresponds to a smaller coverage area compared to the first specific part.

Additionally, the present invention relates to a user equipment, especially as part of a system or connected to an inventive mobile communication network, especially for being used in a mobile communication network for providing radio coverage by means of a non-terrestrial antenna entity or functionality being part of a radio access network of the mobile communication network, wherein the radio coverage is provided in different geographical areas during different time periods by means of the antenna entity or functionality orbiting the earth and having a certain total field of view, wherein the antenna entity or functionality realizes a plurality of different radio beams, each of these radio beams covering a specific part of the total field of view, wherein the antenna entity or functionality is able to be configured such that:
-- at least a first radio beam, having a first specific part of the total field of view, is configured such that the first specific part of the total field of view corresponds to a comparatively large coverage area,
-- at least a second radio beam, having a second specific part of the total field of view, is configured such that the second specific part of the total field of view corresponds to a smaller coverage area compared to the first specific part.

Additionally, the present invention relates to a non-terrestrial antenna entity or functionality for providing radio coverage to user equipments of or connected to a mobile communication network by means of a non-terrestrial antenna entity or functionality being part of a radio access network of the mobile communication network, wherein the radio coverage is provided in different geographical areas during different time periods by means of the antenna entity or functionality orbiting the earth and having a certain total field of view, wherein the antenna entity or functionality realizes a plurality of different radio beams, each of these radio beams covering a specific part of the total field of view, wherein the antenna entity or functionality is able to be configured such that:
-- at least a first radio beam, having a first specific part of the total field of view, is configured such that the first specific part of the total field of view corresponds to a comparatively large coverage area,
-- at least a second radio beam, having a second specific part of the total field of view, is configured such that the second specific part of the total field of view corresponds to a smaller coverage area compared to the first specific part.

Furthermore, the present invention relates to a program and to a computer-readable medium for providing radio coverage to a user equipment of or connected to a mobile communication network by means of a non-terrestrial antenna entity or functionality according to the inventive method.

Mobile communication networks such as public land mobile networks are typically realized as cellular mobile communication networks, i.e. comprising (or using or being associated or assigned to a radio access network comprising) radio cells. Such cellular systems are known conforming to different mobile communication standards or radio access technologies, like 2G/3G/4G/5G/6G radio access technologies (referring to the different generations of radio access technologies) and typically comprise (or consist of) cells (or radio cells) of one or a plurality of the respective radio access technology/radio access technologies. Such mobile communication networks that are purely or predominantly based on terrestrial infrastructures of the radio access network are typically organized throughout a country (or a part of or a region within a country) in a repeating pattern of typically stationary (radio) cells (and associated base station entities) which typically belong to (or are used by or associated or assigned to) a mobile network operator (MNO).
Modern mobile communication networks, such as 5G systems, especially using 5G NR (new radio) radio (access) technology, are evolving using air-based and/or space-based infrastructure, hence relying, at least partly, on non-terrestrial infrastructure, especially in the form of satellites and/or high altitude platforms, HAPs, thereby realizing non-terrestrial networks, NTN (or satellite communication networks). Examples of such air-based and/or space-based network infrastructure include, e.g., mobile satellite connectivity with low earth orbit (LEO) satellites, medium earth orbit (MEO) satellites and/or geostationary earth orbit (GEO) satellites and also so-called high-altitude platforms or high-altitude pseudo-satellites (HAPS).
Such non-terrestrial networks are able to provide global cellular connectivity to handheld devices or user equipments, typically using satellite or HAP coverage, with earth-moving beams to provide radio coverage in a moving geographical area (earth-moving radio cell), that is moving, relative to the earth's surface, essentially together with the movement of the satellite (or the high-altitude platform device), i.e. especially together with the movement of the non-terrestrial antenna entities or functionalities aboard of such satellites and/or HAPs.

In terrestrial mobile communication networks, the typical approach for providing radio coverage to a certain geographic area and/or to a certain number of user equipments is by means of using base station entities that are typically stationary and wherein each base station entity serves a radio cell (or a plurality of radio cells) that is (are) likewise typically rather stationary. Of course, in case that a plurality of such base station entities are required - e.g. in view of a larger geographic area to be covered and/or in view of a higher (peak) demand for mobile communication services to be provided - a plurality of such mostly stationary base station entities are used, again, each one serving a radio cell (or a plurality of radio cells) that is (are) likewise typically rather stationary, i.e. each radio cell (or, the corresponding geographical area) is likewise rather stationary, and regarding a mobile user or user equipment that is geographically moving sufficiently to leave one (rather stationary) radio cell and to enter another (rather stationary) radio cell there will be the need to perform a handover procedure, at least in case a user equipment is considered that is currently in a certain mode of operation, such as connected mode.
Hence, handover procedures are required to be performed in case of any such movements of such mobile users or user equipments relative to the (rather stationary) radio cells provided by the (rather stationary) base station entities of typical terrestrial mobile communication networks.

Regarding non-terrestrial networks, the same principle applies: whenever the respective radio cell of a mobile station or user equipment changes radio cell boundaries (due to movements of such mobile users or user equipments, or - rather, in case of using non-terrestrial antenna entities or functionalities - due to earth-moving beams of such non-terrestrial antenna entities or functionalities) a handover needs to happen - again at least in case the user equipment considered is currently in a certain mode of operation, such as connected mode. However, performing handover procedures is costly (not only in terms of energy used, e.g. for performing, especially radiofrequency, measurements, or for transmitting and/or receiving additional radiofrequency signals, or for performing processing, but also in terms of additional overhead communications required, and, hence, associated usage of limited air interface capacity), not only for the user equipment involved as well as for the base station entity involved, but also - more generally and also as a consequence thereof - for the considered mobile communication network.
In a typical non-terrestrial network deployment, antenna entities or functionalities (typically aboard of satellites) are used generating or creating quite a huge number of individual (radio coverage) beams, or spot beams, per satellite (or per antenna entity or functionality) - e.g. at least 100 to 500 spot beams, or even well beyond, e.g. using more than 1000 or 2000 spot beams.
Such antenna entities or functionalities (or satellites) might be used such that each of its spot beams in terms of mobile communication networks provides a distinct (radio) cell which is identified uniquely by a (different or distinct) physical cell identity, PCI. Alternatively multiple spot beams are also able to be combined by means of using the same physical cell identity (or physical cell identity information), i.e. to form larger radio cells.

### SUMMARY

An object of the present invention is to provide a technically simple, effective and cost-effective solution for providing radio coverage to user equipments of or connected to a mobile communication network by means of a non-terrestrial antenna entity or functionality being part of a radio access network of the mobile communication network, wherein such provision of radio coverage is realized using at least a first radio beam having a comparatively large coverage area and at least a second radio beam having a smaller coverage area compared to the first specific part, wherein a specific geographical area, having a comparatively high communication demand, is able to be provided with radio coverage using at least the second radio beam (that has the smaller coverage area). A further object of the present invention is to provide a corresponding system or mobile communication network, a corresponding user equipment, a corresponding non-terrestrial antenna entity or functionality, and a corresponding program and computer-readable medium.

The object of the present invention is achieved by a method for providing radio coverage to user equipments of or connected to a mobile communication network by means of a non-terrestrial antenna entity or functionality being part of a radio access network of the mobile communication network, wherein the radio coverage is provided in different geographical areas during different time periods by means of the antenna entity or functionality orbiting the earth and having a certain total field of view, wherein the antenna entity or functionality realizes a plurality of different radio beams, each of these radio beams covering a specific part of the total field of view, wherein the antenna entity or functionality is able to be configured such that:
-- at least a first radio beam, having a first specific part of the total field of view, is configured such that the first specific part of the total field of view corresponds to a comparatively large coverage area,
-- at least a second radio beam, having a second specific part of the total field of view, is configured such that the second specific part of the total field of view corresponds to a smaller coverage area compared to the first specific part,
wherein in order to provide radio coverage to a specific geographic area having an increased demand of transmission capacity, the method comprises the step of operating the antenna entity or functionality such that, during a specific time interval of the specific geographic area being part of the total field of view of the antenna entity or functionality, radio coverage is provided, to the specific geographic area, by, or using, the second radio beam, or both the first radio beam and the second radio beam.

It is thereby advantageously possible, according to the present invention, to be able to adapt the configuration of the radio beams of antenna entities or functionalities in a flexible manner such that the non-terrestrial radio access network is able to provide (by means of the second radio beam) sufficient network (or air interface) capacity in the second part of the of the total field of view (i.e. geographical areas of higher network capacity demand) - and nevertheless be able to provide (by means of the first radio beam) radio coverage in the residual part of the total field of view by means of a large(r) radio cell in the first specific part of the total field of view (i.e. geographical areas of lower network capacity demand); especially the second part of the total field of view is served, or provided with radio coverage by both the first radio beam and the second radio beam of the antenna entity or functionality. Especially regarding the first radio beam, it is advantageously possible to save resources, especially energy resources on the side of the non-terrestrial radio access network, but, thereby, typically also be able to reduce the number of handovers required by user equipments or mobile stations served and located in such geographical areas (and thereby, at least potentially, reduce their energy consumption. Such reduction of the number, or the rate of handover procedures is also able to be realized in the second specific part of the total field of view, as the second radio beam (of a considered antenna entity or functionality) is providing radio coverage as long as possible to the second specific part of the total field of view. Reducing the number, or the rate of handover procedures (that would otherwise have been required), of course, also advantageously reduces the risk that a connection is lost (due to the handover not being successful); furthermore, all procedures related to performing a handover that is able to be avoided can also be avoided, e.g. related neighbor cell planning and configuration as part of planning and operational tasks.
According to the present invention, by means of using a comparatively large radio coverage area in geographical areas of lower communication demand, it is advantageously possible to avoid all these planning, configuration and execution aspects (regarding avoided handover procedures).

In known satellites or antenna entities or functionalities, it is known to use a large number of spot beams or radio beams (e.g. 100 to 500, or even more than 1000 or 2000 spot beams); one option is to use a configuration where the number of spot beams is not changed on the "projection area" (i.e. the total field of view) on the ground but the grouping or the geometrical shape does, hence differently shaped coverage areas are able to be realized; with steerable beams of currently known satellite generations including low earth orbit satellites, it is also possible to form different coverage areas. According to the present invention, it is possible to use each radio beam or spot beam individually, i.e. such that it provides a distinct radio cell (being identified uniquely by a physical cell identity (information)). According to the present invention, it is especially advantageously possible to adapt such radio beam configurations in a manner dependent on the requirements of user equipments or mobile stations located in the total field of view of the respective antenna entity or functionality; especially, the second specific part of the total field of view has a comparatively high communication demand or respective requirements whereas the first specific part of the total field of view has a lower communication demand or respective requirements. According to the present invention, it is advantageously possible to control the serving antenna entities or functionalities accordingly in a manner such as to provide an appropriate radio coverage to both the first and the second specific part of the total field of view; depending on the capabilities of the respective antenna entity or functionality (e.g. by means of using beam sweeping technologies) especially the second specific part of the total field of view is provided with radio coverage, by either using the second radio beam (only), or by using both the first and the second radio beam.

According to the present invention, user equipments of or connected to a mobile communication network shall be provided with radio coverage by a non-terrestrial radio access network in an efficient manner (especially both regarding efficiency of the non-terrestrial radio access network and/or of its components, especially antenna entities or functionalities and/or base station entities, and regarding user equipments or mobile stations). In this respect, a non-terrestrial antenna entity or functionality - being part of the (non-terrestrial) radio access network of the mobile communication network, and having a certain total field of view - provides radio coverage in different geographical areas during different time periods as it orbits the earth. The antenna entity or functionality realizes a plurality of different radio beams (or spot beams), wherein each of these radio beams covers a specific part of the total field of view.
The antenna entity or functionality is able to be configured in a manner such that individual radio beams (or a comparatively small number of such radio beams) - second radio beam according to the inventive method - generate (or provide) one or a plurality of radio cells in the second specific part of the total field of view, and, additionally, in a manner such that - first radio beam according to the inventive method - either one comparatively large radio beam is formed, or a larger number of radio beams (i.e. other radio beams that are not part of the second radio beam) are (contiguously) grouped to form a large(r) radio cell or radio cells.
It is advantageously possible, according to the present invention, to provide radio coverage to a specific geographical area having an increased demand of transmission capacity by means of operating the antenna entity or functionality such that, during a specific time interval of the specific geographic area being part of the total field of view of the considered antenna entity or functionality, radio coverage is provided, to the specific geographic area, by, or using, the second radio beam (only), or both the first radio beam and the second radio beam. For example, the definition of the first and second radio beams (i.e. which individual radio beams belong to the first radio beam and which belong to the second radio beam) is able to be dynamically adapted in dependency of the currently covered geographical area, especially it is thereby advantageously possible to provide (by means of the first radio beam) radio coverage, e.g., to remote areas (having, in average, comparatively low transmission requirements) but nevertheless be able to provide a higher transmission capacity in specific locations where a high capacity demand from the satellites is required, e.g. locations of container ships or cruising ships, or oil ricks or offshore wind and/or solar farms on the ocean or closer to the coast and/or locations of mines of natural resources in remote areas.

In conventionally known mobile communication networks using non-terrestrial radio access networks, the high number of spot beams of currently used satellites (which is there for capacity reasons) is often not needed - e.g. when used over unpopulated areas or especially over the sea.
According to the present invention, the transmission of so many radio beams is avoided in such situations, i.e. with regard to the first specific part of the total field of view, which also provides benefits in terms of reduced radiation and lowered energy consumption on the satellite, especially in case of regenerative payload within the base station entity or gNB (or at least the gNB distributed unit) on the satellite. Nevertheless, in the second specific part of the total field of view, it is advantageously possible to provide an increased service level of transmission capacity according to the increased demand there. Hence, according to the present invention, it is advantageously possible to configure the antenna entity or functionality (especially by means of configuring the respective radio beams and the related per beam processing capacity) depending on the expected area capacity. Furthermore, in case that earth moving radio cells are used in such areas, it is also beneficial for the connected devices on the ground (i.e. user equipments) in these areas to be kept on a particular radio cell for an extended time, as, in this case, all the mobility procedures occur less often, which is especially relevant and beneficial for internet-of-things devices with constrained battery capacity. For regenerative payload on low earth orbit satellites, this has also a positive benefit on the required backhaul (feeder link), in inter-satellite links and teleports capacity and the related processing requirements.

The present invention is focused on low earth orbit (LEO) satellites or high altitude platform entities which typically are located up to 300 km until 1500 km above ground (especially 400 km to 1000 km), and are, typically, traveling at a velocity of around 7 km/s, resulting in a round trip time about the globe of typically about 100 minutes.

According to the present invention, it is advantageously possible and preferred that, during the specific time interval, the second radio beam is controlled such as to continuously, or stationarily, provide radio coverage to the specific geographic area despite the antenna entity or functionality moving above and relative to the specific geographic area, especially by means of at least one out of the following:
-- controlling an antenna element of the antenna entity or functionality such that the second radio beam, generated by that antenna element, is steered accordingly,
-- controlling the antenna entity or functionality such that the second radio beam is generated subsequently by different antenna elements of the antenna entity or functionality such that the second radio beam stays essentially stationary at the specific geographic area.

It is thereby advantageously possible to realize and implement the inventive method in a comparatively simple and efficient manner.

According to the present invention, it is advantageously furthermore possible and preferred that the antenna entity or functionality is operated such that radio coverage is provided - to the specific geographic area and by both the first and second radio beams - by means of using multiple transmission or reception points, mTRPs, especially forming a distributed multiple input multiple output configuration, especially within the antenna entity or functionality and/or within a single satellite.

It is thereby advantageously possible to realize and implement the inventive method in a comparatively simple and efficient manner.

According to the present invention, it is furthermore advantageously possible and preferred that the antenna entity or functionality is operated such that radio coverage is provided - to the specific geographic area and by both the first and second radio beams - by means of using carrier aggregation, wherein, in order to realize carrier aggregation, the first radio beam uses a first frequency and the second radio beam uses a second frequency, different from the first frequency.

It is thereby advantageously possible to realize and implement the inventive method in a comparatively simple and efficient manner.

According to the present invention, it is furthermore advantageously possible and preferred that the radio coverage is provided using a regenerative payload deployment such that the antenna entity or functionality comprises or is integrated with a base station entity being part of the radio access network, wherein the antenna entity or functionality comprises or is integrated with at least a distributed unit of the base station entity.

It is thereby advantageously possible to realize and implement the inventive method in a comparatively simple and efficient manner.

Furthermore, it is advantageously possible and preferred according to the present invention that the antenna entity or functionality is or corresponds to or is integrated with a satellite.

It is thereby advantageously possible to realize and implement the inventive method in a comparatively simple and efficient manner.

Furthermore, it is advantageously possible and preferred according to the present invention that the antenna entity or functionality comprises a first part and a second part, wherein the first part of the antenna entity or functionality corresponds to or is located on a first satellite and the second part of the antenna entity or functionality corresponds to or is located on a second satellite, wherein the first part of the antenna entity or functionality generates the first radio beam and wherein the second part of the antenna entity or functionality generates the second radio beam, wherein especially the first satellite corresponds to a medium earth orbit satellite or a geostationary earth orbit satellite and the second satellite corresponds to a low earth orbit satellite.

It is thereby advantageously possible to realize and implement the inventive method in a comparatively simple and efficient manner.

Furthermore, the present invention relates to a system or to a mobile communication network for providing radio coverage to user equipments of or connected to the mobile communication network by means of a non-terrestrial antenna entity or functionality being part of a radio access network of the mobile communication network, wherein the radio coverage is provided in different geographical areas during different time periods by means of the antenna entity or functionality orbiting the earth and having a certain total field of view, wherein the antenna entity or functionality realizes a plurality of different radio beams, each of these radio beams covering a specific part of the total field of view, wherein the antenna entity or functionality is able to be configured such that:
-- at least a first radio beam, having a first specific part of the total field of view, is configured such that the first specific part of the total field of view corresponds to a comparatively large coverage area,
-- at least a second radio beam, having a second specific part of the total field of view, is configured such that the second specific part of the total field of view corresponds to a smaller coverage area compared to the first specific part,
wherein in order to provide radio coverage to a specific geographic area having an increased demand of transmission capacity, the method comprises the step of operating the antenna entity or functionality such that, during a specific time interval of the specific geographic area being part of the total field of view of the antenna entity or functionality, radio coverage is provided, to the specific geographic area, by, or using, the second radio beam, or both the first radio beam and the second radio beam.

Furthermore, the present invention relates to a user equipment, especially as part of an inventive system or connected to an inventive mobile communication network, especially for being used in a mobile communication network for providing radio coverage by means of a non-terrestrial antenna entity or functionality being part of a radio access network of the mobile communication network, wherein the radio coverage is provided in different geographical areas during different time periods by means of the antenna entity or functionality orbiting the earth and having a certain total field of view, wherein the antenna entity or functionality realizes a plurality of different radio beams, each of these radio beams covering a specific part of the total field of view, wherein the antenna entity or functionality is able to be configured such that:
-- at least a first radio beam, having a first specific part of the total field of view, is configured such that the first specific part of the total field of view corresponds to a comparatively large coverage area,
-- at least a second radio beam, having a second specific part of the total field of view, is configured such that the second specific part of the total field of view corresponds to a smaller coverage area compared to the first specific part,
wherein in order to provide radio coverage to a specific geographic area having an increased demand of transmission capacity, the method comprises the step of operating the antenna entity or functionality such that, during a specific time interval of the specific geographic area being part of the total field of view of the antenna entity or functionality, radio coverage is provided, to the specific geographic area, by, or using, the second radio beam, or both the first radio beam and the second radio beam.

Furthermore, the present invention relates to a non-terrestrial antenna entity or functionality for providing radio coverage to user equipments of or connected to a mobile communication network by means of a non-terrestrial antenna entity or functionality being part of a radio access network of the mobile communication network, wherein the radio coverage is provided in different geographical areas during different time periods by means of the antenna entity or functionality orbiting the earth and having a certain total field of view, wherein the antenna entity or functionality realizes a plurality of different radio beams, each of these radio beams covering a specific part of the total field of view, wherein the antenna entity or functionality is able to be configured such that:
-- at least a first radio beam, having a first specific part of the total field of view, is configured such that the first specific part of the total field of view corresponds to a comparatively large coverage area,
-- at least a second radio beam, having a second specific part of the total field of view, is configured such that the second specific part of the total field of view corresponds to a smaller coverage area compared to the first specific part,
wherein in order to provide radio coverage to a specific geographic area having an increased demand of transmission capacity, the method comprises the step of operating the antenna entity or functionality such that, during a specific time interval of the specific geographic area being part of the total field of view of the antenna entity or functionality, radio coverage is provided, to the specific geographic area, by, or using, the second radio beam, or both the first radio beam and the second radio beam.

Additionally, the present invention relates to a program comprising a computer readable program code which, when executed on a computer and/or on a user equipment and/or on a network node of a mobile communication network, especially the antenna entity or functionality, or in part on a user equipment and/or in part on the network node of the mobile communication network, especially the antenna entity or functionality, causes the computer and/or the user equipment and/or the network node of the mobile communication network, especially the antenna entity or functionality to perform the inventive method.

Still additionally, the present invention relates to a computer-readable medium comprising instructions which when executed on a computer and/or on a user equipment and/or on a network node of a mobile communication network, especially the antenna entity or functionality, or in part on a user equipment and/or in part on the network node of the mobile communication network, especially the antenna entity or functionality, causes the computer and/or the user equipment and/or the network node of the mobile communication network, especially the antenna entity or functionality to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

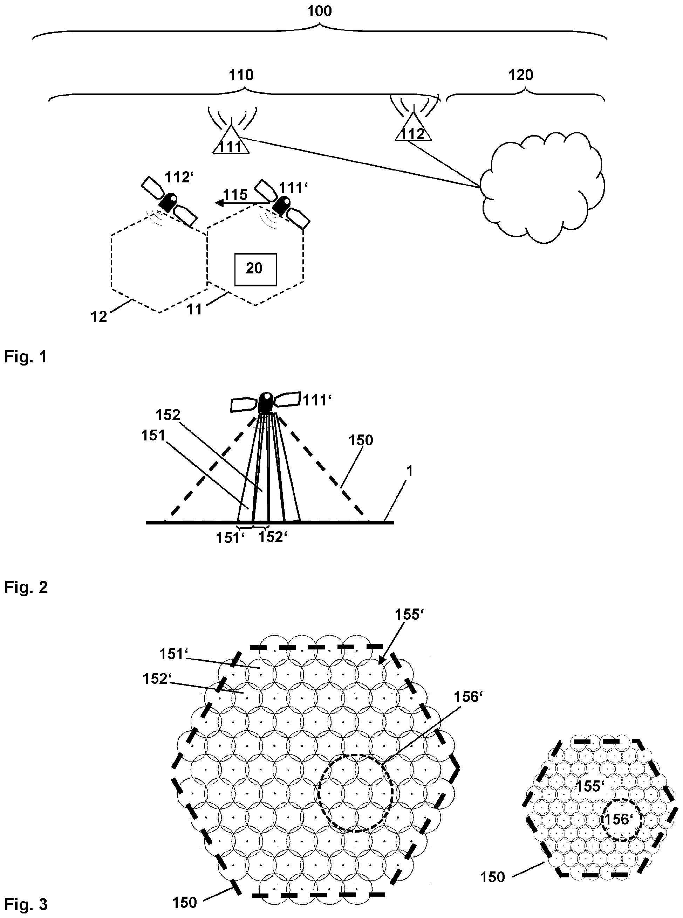

Figure 1 schematically illustrates the situation of a user equipment in a mobile communication network comprising a non-terrestrial network as its radio access network or, at least, as a part of its radio access network, wherein the user equipment is served by a base station entity (or by a plurality of base station entities), wherein the radio coverage is provided in different geographical areas during different time periods by means of an antenna entity or functionality (but preferably a plurality of antenna entities or functionalities) orbiting the earth and having a certain total field of view.
Figure 2 schematically illustrates the situation of the antenna entity or functionality being able to serve the user equipment, wherein the antenna entity or functionality realizes a plurality of different radio beams, each of these radio beams covering a specific part of the total field of view.
Figure 3 schematically illustrates a top view of the total field of view of an exemplary antenna entity or functionality that is able to serve a user equipment, or a plurality of user equipments, located within the total field of view, wherein schematically the first and the second specific part of the total field of view are shown, such specific parts being generated, respectively, by the first and second radio beams of the antenna entity or functionality.

### DETAILED DESCRIPTION

The present invention will be described with respect to particular embodiments and with reference to certain drawings, but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, a user equipment 20 is schematically shown in (or connected to) a mobile communication network 100. The mobile communication network 100 comprises a non-terrestrial network as its radio access network 110 or, at least, as a part of its radio access network. The user equipment 20 is served by a base station entity 111 (or by a plurality of base station entities 111, 112). Radio coverage is provided, to the user equipment 20, in different geographical areas during different time periods by means of an antenna entity or functionality 111' (but preferably a plurality of antenna entities or functionalities 111', 112') orbiting the earth and having, each, a certain total field of view.

The first and second antenna entities or functionalities 111', 112', as represented in Figure 1, might be, respectively, part of the (first) base station entity 111 and of the second base station entity 112 (in which case the first and second base station entities 111, 112 are part of the different satellites); alternatively, the first and second antenna entities or functionalities 111', 112' might be (only) associated to the (first) base station entity 111 and/or to the second base station entity 112. In any case, by means of using the first and second antenna entities or functionalities 111', 112', the (first) base station entity 111 (and/or the second base station entity 112) serves or provides radio coverage to the user equipment 20.
The first antenna entity or functionality 111' is moving relative to the earth surface along a direction of movement which is schematically indicated by reference sign 115 in Figure 1. Likewise, the second antenna entity or functionality 112' is moving relative to the earth surface along a direction of movement (not specifically indicated in Figure 1).

In the exemplary representation shown in Figure 1, the mobile communication network 100 comprises, besides the access network 110, a core network 120. The mobile communication network 100 is preferably a cellular telecommunications network comprising typically a plurality of network cells (or radio cells). According to the present invention, the mobile communication network 100 comprises or uses or is associated or assigned to the radio access network 110, and the radio access network 110 (of the mobile communication network 100) comprises at least the base station entity 111, but typically a plurality of base station entities 111, 112. Figure 1 schematically and exemplarily shows the base station entities 111, 112 as a first base station entity 111 as well as a second base station entity 112.

The mobile communication network 100 (or telecommunications network 100) - or its (radio) access network 110 - is or at least comprises a non-terrestrial network in view of serving or providing radio coverage to the user equipment 20. E.g., the user equipment 20 is served by the (first) base station entity 111 being part of that non-terrestrial network.
An antenna entity or functionality 111' is also part of the non-terrestrial network or of the (radio) access network 110. The (first) antenna entity or functionality 111' is either a satellite-based antenna entity or functionality, or an antenna entity or functionality based on a high-altitude platform; however, the figures primarily show the alternative of a satellite-based antenna entity or functionality 111'. Figure 1 furthermore also shows another antenna entity or functionality 112' (or second antenna entity or functionality (112') that is - likewise preferably located aboard a satellite. However, in the context of the present invention, in case it is mentioned that the antenna entity or functionality 111' and/or the further antenna entity or functionality 112' is located aboard of, or part of, a satellite or a plurality of satellites, it is to be understood - if not explicitly or implicitly stated otherwise - that the first antenna entity or functionality 111' and/or the further antenna entity or functionality 112' might alternatively also be located aboard of, or as part of, a high-altitude platform or of a plurality of high-altitude platforms.
In Figure 1, it is primarily hinted at a transparent payload architecture of the non-terrestrial radio access network 110 (i.e. the base station entities 111, 112 - or the corresponding functionalities - are, rather, located on the ground, and, thus, not aboard the satellite or high altitude platform); however, the present invention also addresses or relates to (albeit not explicitly represented in the Figures) a non-terrestrial radio access network 110 having a regenerative payload architecture and/or having a regenerative base station entity-distributed unit payload architecture. Figure 1 furthermore schematically shows that radio coverage is provided in different geographical areas by different antenna entities or functionalities 111', 112': Typically, the antenna entities or functionalities 111', 112' more or less constantly have their respective field of view; however, they are orbiting the earth, and, thus, are able to provide radio coverage in different geographical areas during different time periods. For the point in time schematically shown in Figure 1, both antenna entities or functionalities 111', 112' are able to provide radio coverage to different (in this case rather adjacent) geographical areas. In the geographical areas for which an antenna entity or functionality 111', 112' is able to provide radio coverage, typically at least one radio cell is able to be generated; however, typically a plurality of radio cells is able to be generated by just one of the antenna entities or functionalities 111', 112' by means of the antenna entities or functionalities 111', 112' using, respectively, a plurality of different beams or radio beams. Regarding one considered antenna entity or functionality 111', 112' all such radio beams taken together correspond to the total field of view of the respective antenna entity or functionality 111', 112'. Figure 1 schematically and exemplarily shows one radio cell 11 being generated by the (first) antenna entity or functionality 111' as well as a second radio cell 12 being generated by the further (or second) antenna entity or functionality 112'. Especially, the radio cells that are schematically shown in Figure 1 are able to be understood as corresponding to the total field of view, respectively, of the respective antenna entities or functionalities 111', 112', i.e. all radio beams of such antenna entities or functionalities 111', 112' would - in such a scenario - be combined to form one single radio cell, i.e. are transmitting one and the same (piece of) physical cell identity (information).

In Figure 2, a schematically illustrated 'side view' of a satellite or an antenna entity or functionality (exemplarily the (first) antenna entity or functionality 111') is represented (i.e. along a projection direction roughly perpendicular to the central beam of the antenna entity or functionality 111', i.e. roughly perpendicular to the direction defined by the satellite itself and the subsatellite point on the earth surface 1, i.e. the point below the satellite). The (first) antenna entity or functionality 111' is able to serve user equipments 20 (not shown in Figure 2) if such user equipments 20 are located within the total field of view 150 of the antenna entity or functionality 111'. Typically, the antenna entity or functionality 111' is (constantly) orbiting the earth; thus, having a certain total field of view 150 means that radio coverage is able to be provided in different geographical areas during different time periods.
Figure 2 hints at representing a plurality of different individual radio beams 151, 152, wherein each of these individual radio beams is able to cover a specific part out of the total geographical area corresponding to the total field of view 150: In the exemplary representation of Figure 2, the radio beams 151, 152 covers, respectively, individual specific parts 151', 152' of the total field of view 150.

The different possibilities to combine the individual radio beams 151, 152 of an antenna entity or functionality (such as the (first) antenna entity or functionality 111' or the further (or second) antenna entity or functionality 112') is schematically shown in Figure 3 which represents two top views (of different sizes) of the total field of view 150 (especially a projection of the total field of view 150 onto a plane (especially a plane perpendicular to the direction defined by the satellite itself and the subsatellite point), rather than a curved surface such as the earth's surface) of an exemplary antenna entity or functionality 111', 112' that is able to provide radio coverage (and thereby serve, especially together with a respective base station entity 111, 112) to user equipments 20 (not represented in Figure 3), located within the total field of view 150. Figure 3 shows on the left hand side a larger representation of the total field of view 150, and on the right hand side a smaller representation thereof. Besides the edge of the total field of view 150 of the antenna entity or functionality 111' (this edge being schematically represented, in Figure 3 in in both representations, by means of a bold dashed line), different individual specific parts 151', 152' of the total field of view 150 are schematically represented by small circles (each having a dot at its center). Such individual specific parts 151', 152' (for the sake of simplicity, only reference signs 151', 152' are indicated) of the total field of view 150 are generated, respectively, by the different individual radio beams (exemplarily shown in Figure 2 by means of radio beams 151, 152) of the antenna entity or functionality 111'. Furthermore, Figure 3 (and especially on the right hand side) shows the first specific part 155' and the second specific part 156' of the total field of view 150, such specific parts 155', 156' being generated, respectively, by the first and second radio beams of the antenna entity or functionality, wherein the first radio beam typically comprises a plurality (or almost all) of the individual radio beams, and wherein the second radio beam typically comprises at least one individual radio beam; in Figure 3, the second radio beam is exemplarily shown to comprise 7 individual radio beams.

According to the present invention, in order to provide radio coverage to a specific geographic area having an increased demand of transmission capacity, the method comprises the step of operating the antenna entity or functionality 111' such that, during a specific time interval of the specific geographic area being part of the total field of view 150 of the antenna entity or functionality 111', radio coverage is provided, to the specific geographic area, by, or using, the second radio beam, or both the first radio beam and the second radio beam.

It is thereby advantageously possible, according to the present invention, that the configuration of the individual radio beams (or spot beams) and especially the configuration of the radio cells (resulting from such grouping or not grouping of individual radio beams) - each radio cell being operated such as to have an assigned (piece of) physical cell identity (information) that needs to be different compared to the (piece of) physical cell identity (information) of neighboring radio cells - is able to be chosen such that
-- by means of the first radio beam and in the first specific part 155' of the total field of view 150 one relatively large radio cell (or a plurality of relatively large radio cells) is generated for serving comparatively low capacity demands (especially due to a comparatively low number of devices or user equipments) by means of multiple individual spot beams being configured with the same physical cell identity PCI for a resulting larger single radio cell, whereas
-- by means of the second radio beam and in the second specific part 156' of the total field of view 150 - corresponding to the specific geographic area having an increased demand of transmission capacity - a comparatively high transmission capacity is able to be realized in a manner such that, during a specific time interval of the specific geographic area being part of the total field of view 150 of the antenna entity or functionality 111', radio coverage is provided, to the specific geographic area (i.e. to the second specific part 156'), by, or using, the second radio beam, or both the first radio beam and the second radio beam.
Hence, according to the present invention and using the second radio beam, it is advantageously possible that satellite spot beams are (or, rather, their configuration is) dynamically shaped such as to cater for the increased demand of transmission capacity in the specific geographic area, i.e. dynamically changed to keep spotting (covering) on a particular area of the sparsely populated sea or land area. In an extreme case the satellite beam configuration could provide a very large beam (first radio beam) for large coverage, while inside this coverage beam one or multiple spot beams (second radio beam) are created to over those high-capacity demand areas as described above. This can be done, e.g., with phase array antennas instead of fixed antenna pattern.

Hence, according to the present invention, it is especially preferred that, during the specific time interval, the second radio beam is controlled such as to continuously, or stationarily, provide radio coverage to the specific geographic area despite the antenna entity or functionality 111' moving above and relative to the specific geographic area, especially by means of at least one out of the following:
-- controlling an antenna element of the antenna entity or functionality 111' such that the second radio beam, generated by that antenna element, is steered accordingly,
-- controlling the antenna entity or functionality 111' such that the second radio beam is generated subsequently by different antenna elements of the antenna entity or functionality 111' such that the second radio beam stays essentially stationary at the specific geographic area.

Furthermore, it is especially preferred according to the present invention, that the antenna entity or functionality 111' is operated such that radio coverage is provided - to the specific geographic area and by both the first and second radio beams - by means of using multiple transmission or reception points, mTRPs, especially forming a distributed multiple input multiple output configuration, especially within the antenna entity or functionality 111' and/or within a single satellite.
Hence, according to such a scenario either multiple spot beams of a single satellite are configured in a way that they act similar to multiple transmissions-reception points (mTRPs) forming a distributed MIMO configuration inside a single satellite (providing the benefit of not requiring (or reducing the need of) sophisticated inter-satellite transmission via ISL (Inter-Satellite-Links), but even greater benefit would come from the distribution of the mTRPs over multiple satellites.

Furthermore, it is especially preferred according to the present invention, that the antenna entity or functionality 111' is operated such that radio coverage is provided - to the specific geographic area and by both the first and second radio beams - by means of using carrier aggregation, wherein, in order to realize carrier aggregation, the first radio beam uses a first frequency and the second radio beam uses a second frequency, different from the first frequency.
Alternatively or cumulatively, it is furthermore especially preferred according to the present invention, that the antenna entity or functionality 111' comprises a first part and a second part, wherein the first part of the antenna entity or functionality 111' corresponds to or is located on a first satellite and the second part of the antenna entity or functionality 111' corresponds to or is located on a second satellite, wherein the first part of the antenna entity or functionality 111' generates the first radio beam and wherein the second part of the antenna entity or functionality 111' generates the second radio beam, wherein especially the first satellite corresponds to a medium earth orbit satellite (MEO) or a geostationary earth orbit satellite and the second satellite corresponds to a low earth orbit satellite (LEO).
In such a scenario, e.g. a LEO/MEO constellation is able to be used, where the MEO would provide a baseline coverage over the wide ocean, with limited capacity on a first frequency (frequency 1, f1, transmitted using the first radio beam), while the LEO or plurality of LEOs during their (faster) fly-by times, would selectively activate their spot beam transmissions on a second frequency (frequency 2, f2, transmitted using the second radio beam) while the user equipment in that (higher capacity demand) regions (ships, oil ricks, etc) performs a carrier aggregation between f1 and f2.

## Claims

1. Method for providing radio coverage to user equipments of or connected to a mobile communication network (100) by means of a non-terrestrial antenna entity or functionality (111') being part of a radio access network (110) of the mobile communication network (100), wherein the radio coverage is provided in different geographical areas during different time periods by means of the antenna entity or functionality (111') orbiting the earth and having a certain total field of view (150), wherein the antenna entity or functionality (111') realizes a plurality of different radio beams (151, 152), each of these radio beams (151, 152) covering a specific part (151', 152') of the total field of view (150), wherein the antenna entity or functionality (111') is able to be configured such that:
-- at least a first radio beam, having a first specific part (155') of the total field of view (150), is configured such that the first specific part (155') of the total field of view (150) corresponds to a comparatively large coverage area,
-- at least a second radio beam, having a second specific part (156') of the total field of view (150), is configured such that the second specific part (156') of the total field of view (150) corresponds to a smaller coverage area compared to the first specific part (155'),
wherein in order to provide radio coverage to a specific geographic area having an increased demand of transmission capacity, the method comprises the step of operating the antenna entity or functionality (111') such that, during a specific time interval of the specific geographic area being part of the total field of view (150) of the antenna entity or functionality (111'), radio coverage is provided, to the specific geographic area, by, or using, the second radio beam, or both the first radio beam and the second radio beam.

2. Method according to claim 1, wherein, during the specific time interval, the second radio beam is controlled such as to continuously, or stationarily, provide radio coverage to the specific geographic area despite the antenna entity or functionality (111') moving above and relative to the specific geographic area, especially by means of at least one out of the following:
-- controlling an antenna element of the antenna entity or functionality (111') such that the second radio beam, generated by that antenna element, is steered accordingly,
-- controlling the antenna entity or functionality (111') such that the second radio beam is generated subsequently by different antenna elements of the antenna entity or functionality (111') such that the second radio beam stays essentially stationary at the specific geographic area.

3. Method according to one of the preceding claims, wherein the antenna entity or functionality (111') is operated such that radio coverage is provided - to the specific geographic area and by both the first and second radio beams - by means of using multiple transmission or reception points, mTRPs, especially forming a distributed multiple input multiple output configuration, especially within the antenna entity or functionality (111') and/or within a single satellite.

4. Method according to one of the preceding claims, wherein the antenna entity or functionality (111') is operated such that radio coverage is provided - to the specific geographic area and by both the first and second radio beams - by means of using carrier aggregation, wherein, in order to realize carrier aggregation, the first radio beam uses a first frequency and the second radio beam uses a second frequency, different from the first frequency.

5. Method according to one of the preceding claims, wherein the radio coverage is provided using a regenerative payload deployment such that the antenna entity or functionality (111') comprises or is integrated with a base station entity (111) being part of the radio access network (110), wherein the antenna entity or functionality (111') comprises or is integrated with at least a distributed unit of the base station entity (111).

6. Method according to one of the preceding claims, wherein the antenna entity or functionality (111') is or corresponds to or is integrated with a satellite.

7. Method according to one of the preceding claims, wherein the antenna entity or functionality (111') comprises a first part and a second part, wherein the first part of the antenna entity or functionality (111') corresponds to or is located on a first satellite and the second part of the antenna entity or functionality (111') corresponds to or is located on a second satellite, wherein the first part of the antenna entity or functionality (111') generates the first radio beam and wherein the second part of the antenna entity or functionality (111') generates the second radio beam, wherein especially the first satellite corresponds to a medium earth orbit satellite or a geostationary earth orbit satellite and the second satellite corresponds to a low earth orbit satellite.

8. System or mobile communication network (100) for providing radio coverage to user equipments of or connected to a mobile communication network (100) by means of a non-terrestrial antenna entity or functionality (111') being part of a radio access network (110) of the mobile communication network (100), wherein the radio coverage is provided in different geographical areas during different time periods by means of the antenna entity or functionality (111') orbiting the earth and having a certain total field of view (150), wherein the antenna entity or functionality (111') realizes a plurality of different radio beams (151, 152), each of these radio beams (151, 152) covering a specific part (151', 152') of the total field of view (150), wherein the antenna entity or functionality (111') is able to be configured such that:
-- at least a first radio beam, having a first specific part (155') of the total field of view (150), is configured such that the first specific part (155') of the total field of view (150) corresponds to a comparatively large coverage area,
-- at least a second radio beam, having a second specific part (156') of the total field of view (150), is configured such that the second specific part (156') of the total field of view (150) corresponds to a smaller coverage area compared to the first specific part (155'),
wherein in order to provide radio coverage to a specific geographic area having an increased demand of transmission capacity, the method comprises the step of operating the antenna entity or functionality (111') such that, during a specific time interval of the specific geographic area being part of the total field of view (150) of the antenna entity or functionality (111'), radio coverage is provided, to the specific geographic area, by, or using, the second radio beam, or both the first radio beam and the second radio beam.

9. User equipment (20), especially as part of a system or connected to a mobile communication network (100) according to claim 7,
especially for being used in a mobile communication network (100) for providing radio coverage by means of a non-terrestrial antenna entity or functionality (111') being part of a radio access network (110) of the mobile communication network (100), wherein the radio coverage is provided in different geographical areas during different time periods by means of the antenna entity or functionality (111') orbiting the earth and having a certain total field of view (150), wherein the antenna entity or functionality (111') realizes a plurality of different radio beams (151, 152), each of these radio beams (151, 152) covering a specific part (151', 152') of the total field of view (150), wherein the antenna entity or functionality (111') is able to be configured such that:
-- at least a first radio beam, having a first specific part (155') of the total field of view (150), is configured such that the first specific part (155') of the total field of view (150) corresponds to a comparatively large coverage area,
-- at least a second radio beam, having a second specific part (156') of the total field of view (150), is configured such that the second specific part (156') of the total field of view (150) corresponds to a smaller coverage area compared to the first specific part (155'),
wherein in order to provide radio coverage to a specific geographic area having an increased demand of transmission capacity, the method comprises the step of operating the antenna entity or functionality (111') such that, during a specific time interval of the specific geographic area being part of the total field of view (150) of the antenna entity or functionality (111'), radio coverage is provided, to the specific geographic area, by, or using, the second radio beam, or both the first radio beam and the second radio beam.

10. Non-terrestrial antenna entity or functionality (111') for providing radio coverage to user equipments of or connected to a mobile communication network (100) by means of a non-terrestrial antenna entity or functionality (111') being part of a radio access network (110) of the mobile communication network (100), wherein the radio coverage is provided in different geographical areas during different time periods by means of the antenna entity or functionality (111') orbiting the earth and having a certain total field of view (150), wherein the antenna entity or functionality (111') realizes a plurality of different radio beams (151, 152), each of these radio beams (151, 152) covering a specific part (151', 152') of the total field of view (150), wherein the antenna entity or functionality (111') is able to be configured such that:
-- at least a first radio beam, having a first specific part (155') of the total field of view (150), is configured such that the first specific part (155') of the total field of view (150) corresponds to a comparatively large coverage area,
-- at least a second radio beam, having a second specific part (156') of the total field of view (150), is configured such that the second specific part (156') of the total field of view (150) corresponds to a smaller coverage area compared to the first specific part (155'),
wherein in order to provide radio coverage to a specific geographic area having an increased demand of transmission capacity, the method comprises the step of operating the antenna entity or functionality (111') such that, during a specific time interval of the specific geographic area being part of the total field of view (150) of the antenna entity or functionality (111'), radio coverage is provided, to the specific geographic area, by, or using, the second radio beam, or both the first radio beam and the second radio beam.

11. Program comprising a computer readable program code, which, when executed on a computer and/or on a user equipment (20) and/or on a network node of a mobile communication network (100), especially the antenna entity or functionality (111'), or in part on a user equipment (20) and/or in part on the network node of the mobile communication network (100), especially the antenna entity or functionality (111'), causes the computer and/or the user equipment (20) and/or the network node of the mobile communication network (100), especially the antenna entity or functionality (111') to perform a method according one of claims 1 to 7.

12. Computer-readable medium comprising instructions which when executed on a computer and/or on a user equipment (20) and/or on a network node of a mobile communication network (100), especially the antenna entity or functionality (111'), or in part on a user equipment (20) and/or in part on the network node of the mobile communication network (100), especially the antenna entity or functionality (111'), causes the computer and/or the user equipment (20) and/or the network node of the mobile communication network (100), especially the antenna entity or functionality (111') to perform a method according one of claims 1 to 7.

## Amended claims

### Amended claims in accordance with Rule 137(2) EPC.

1. Method for providing radio coverage to user equipments connected to a mobile communication network (100) by means of a non-terrestrial antenna entity or functionality (111') being part of a radio access network (110) of the mobile communication network (100), wherein the radio coverage is provided in different geographical areas during different time periods by means of the antenna entity or functionality (111') orbiting the earth and having a certain total field of view (150), wherein the antenna entity or functionality (111') realizes a plurality of different radio beams (151, 152), each of these radio beams (151, 152) covering a specific part (151', 152') of the total field of view (150), wherein the antenna entity or functionality (111') is configured such that:
-- at least a first radio beam, having a first specific part (155') of the total field of view (150), is configured such that the first specific part (155') of the total field of view (150) corresponds to a comparatively large coverage area,
-- at least a second radio beam, having a second specific part (156') of the total field of view (150), is configured such that the second specific part (156') of the total field of view (150) corresponds to a smaller coverage area compared to the first specific part (155'),
wherein in order to provide radio coverage to a specific geographic area having an increased demand of transmission capacity, the method comprises the step of operating the antenna entity or functionality (111') such that, during a specific time interval of the specific geographic area being part of the total field of view (150) of the antenna entity or functionality (111'), radio coverage is provided, to the specific geographic area, by, or using, both the first radio beam and the second radio beam by means of using multiple transmission or reception points, mTRPs.

2. Method according to claim 1, wherein, during the specific time interval, the second radio beam is controlled such as to continuously, or stationarily, provide radio coverage to the specific geographic area despite the antenna entity or functionality (111') moving above and relative to the specific geographic area, especially by means of at least one out of the following:
-- controlling an antenna element of the antenna entity or functionality (111') such that the second radio beam, generated by that antenna element, is steered accordingly,
-- controlling the antenna entity or functionality (111') such that the second radio beam is generated subsequently by different antenna elements of the antenna entity or functionality (111') such that the second radio beam stays essentially stationary at the specific geographic area.

3. Method according to claim 1, wherein the antenna entity or functionality (111') is operated such that radio coverage is provided by means of using the multiple transmission or reception points, mTRPs, forming a distributed multiple input multiple output configuration, especially within the antenna entity or functionality (111') and/or within a single satellite.

4. Method according to one of the preceding claims, wherein the antenna entity or functionality (111') is operated such that radio coverage is provided - to the specific geographic area and by both the first and second radio beams - by means of using carrier aggregation, wherein, in order to realize carrier aggregation, the first radio beam uses a first frequency and the second radio beam uses a second frequency, different from the first frequency.

5. Method according to one of the preceding claims, wherein the radio coverage is provided using a regenerative payload deployment such that the antenna entity or functionality (111') comprises or is integrated with a base station entity (111) being part of the radio access network (110), wherein the antenna entity or functionality (111') comprises or is integrated with at least a distributed unit of the base station entity (111).

6. Method according to one of the preceding claims, wherein the antenna entity or functionality (111') is or corresponds to or is integrated with a satellite.

7. Method according to one of the preceding claims, wherein the antenna entity or functionality (111') comprises a first part and a second part, wherein the first part of the antenna entity or functionality (111') corresponds to or is located on a first satellite and the second part of the antenna entity or functionality (111') corresponds to or is located on a second satellite, wherein the first part of the antenna entity or functionality (111') generates the first radio beam and wherein the second part of the antenna entity or functionality (111') generates the second radio beam, wherein especially the first satellite corresponds to a medium earth orbit satellite or a geostationary earth orbit satellite and the second satellite corresponds to a low earth orbit satellite.

8. System or mobile communication network (100) for providing radio coverage to user equipments connected to a mobile communication network (100) by means of a non-terrestrial antenna entity or functionality (111') being part of a radio access network (110) of the mobile communication network (100), wherein the radio coverage is provided in different geographical areas during different time periods by means of the antenna entity or functionality (111') orbiting the earth and having a certain total field of view (150), wherein the antenna entity or functionality (111') realizes a plurality of different radio beams (151, 152), each of these radio beams (151, 152) covering a specific part (151', 152') of the total field of view (150), wherein the antenna entity or functionality (111') is configured such that:
-- at least a first radio beam, having a first specific part (155') of the total field of view (150), is configured such that the first specific part (155') of the total field of view (150) corresponds to a comparatively large coverage area,
-- at least a second radio beam, having a second specific part (156') of the total field of view (150), is configured such that the second specific part (156') of the total field of view (150) corresponds to a smaller coverage area compared to the first specific part (155'),
wherein in order to provide radio coverage to a specific geographic area having an increased demand of transmission capacity, the method comprises the step of operating the antenna entity or functionality (111') such that, during a specific time interval of the specific geographic area being part of the total field of view (150) of the antenna entity or functionality (111'), radio coverage is provided, to the specific geographic area, by, or using, both the first radio beam and the second radio beam by means of using multiple transmission or reception points, mTRPs.

9. User equipment (20), especially as part of a system or connected to a mobile communication network (100) according to claim 8,
for being used in a mobile communication network (100) for providing radio coverage by means of a non-terrestrial antenna entity or functionality (111') being part of a radio access network (110) of the mobile communication network (100), wherein the radio coverage is provided in different geographical areas during different time periods by means of the antenna entity or functionality (111') orbiting the earth and having a certain total field of view (150), wherein the antenna entity or functionality (111') realizes a plurality of different radio beams (151, 152), each of these radio beams (151, 152) covering a specific part (151', 152') of the total field of view (150), wherein the antenna entity or functionality (111') is configured such that:
-- at least a first radio beam, having a first specific part (155') of the total field of view (150), is configured such that the first specific part (155') of the total field of view (150) corresponds to a comparatively large coverage area,
-- at least a second radio beam, having a second specific part (156') of the total field of view (150), is configured such that the second specific part (156') of the total field of view (150) corresponds to a smaller coverage area compared to the first specific part (155'),
wherein in order to provide radio coverage to a specific geographic area having an increased demand of transmission capacity, the method comprises the step of operating the antenna entity or functionality (111') such that, during a specific time interval of the specific geographic area being part of the total field of view (150) of the antenna entity or functionality (111'), radio coverage is provided, to the specific geographic area, by, or using, both the first radio beam and the second radio beam by means of using multiple transmission or reception points, mTRPs.

10. Non-terrestrial antenna entity or functionality (111') for providing radio coverage to user equipments connected to a mobile communication network (100) by means of a non-terrestrial antenna entity or functionality (111') being part of a radio access network (110) of the mobile communication network (100), wherein the radio coverage is provided in different geographical areas during different time periods by means of the antenna entity or functionality (111') orbiting the earth and having a certain total field of view (150), wherein the antenna entity or functionality (111') realizes a plurality of different radio beams (151, 152), each of these radio beams (151, 152) covering a specific part (151', 152') of the total field of view (150), wherein the antenna entity or functionality (111') is configured such that:
-- at least a first radio beam, having a first specific part (155') of the total field of view (150), is configured such that the first specific part (155') of the total field of view (150) corresponds to a comparatively large coverage area,
-- at least a second radio beam, having a second specific part (156') of the total field of view (150), is configured such that the second specific part (156') of the total field of view (150) corresponds to a smaller coverage area compared to the first specific part (155'),
wherein in order to provide radio coverage to a specific geographic area having an increased demand of transmission capacity, the method comprises the step of operating the antenna entity or functionality (111') such that, during a specific time interval of the specific geographic area being part of the total field of view (150) of the antenna entity or functionality (111'), radio coverage is provided, to the specific geographic area, by, or using, both the first radio beam and the second radio beam by means of using multiple transmission or reception points, mTRPs.

11. Program comprising a computer readable program code, which, when executed on a computer and/or on a user equipment (20) and/or on a network node of a mobile communication network (100), especially the antenna entity or functionality (111'), or in part on a user equipment (20) and/or in part on the network node of the mobile communication network (100), especially the antenna entity or functionality (111'), causes the computer and/or the user equipment (20) and/or the network node of the mobile communication network (100), especially the antenna entity or functionality (111') to perform a method according one of claims 1 to 7.

12. Computer-readable medium comprising instructions which when executed on a computer and/or on a user equipment (20) and/or on a network node of a mobile communication network (100), especially the antenna entity or functionality (111'), or in part on a user equipment (20) and/or in part on the network node of the mobile communication network (100), especially the antenna entity or functionality (111'), causes the computer and/or the user equipment (20) and/or the network node of the mobile communication network (100), especially the antenna entity or functionality (111') to perform a method according one of claims 1 to 7.
